# EUROPEAN PATENT APPLICATION

(11) **EP 4 502 622 A1**
(43) Date of publication of application: **05.02.2025**
(21) Application number: 23774473.5
(22) Date of filing: 06.03.2023
(51) Int. Cl.: G01P 15/08

(54) **INERTIAL MEASUREMENT DEVICE**

(30) Priority: 24.03.2022 JP 2022048037
(71) Applicant: Sony Group Corporation, Tokyo 108-0075 (JP)
(72) Inventor: AMANO, Toru, Tokyo 108-0075 (JP); YAMASHITA, Kosei, Tokyo 108-0075 (JP)
(74) Representative: MFG Patentanwälte Meyer-Wildhagen Meggle-Freund Gerhard PartG mbB
(86) International application number: PCT/JP2023/008230
(87) International publication number: WO 2023/181874

(57) **Abstract**

The present disclosure relates to an inertial measurement apparatus capable of reducing a decrease in measurement accuracy due to a rapid temperature change of an IMU caused by airflow generated along with movement of a drone.

There is provided an IMU fixing substrate having, on each of an upper surface and lower surface thereof, a recess (cavity) in which an inertial measurement unit (IMU) that detects angular velocity and acceleration is embedded and fixed, the recess on the lower surface is disposed on the substrate so that the substrate functions as a lid, and a control IC is disposed on the recess on the upper surface so as to function as a lid. The present invention can be applied to a drone.

## Description

### TECHNICAL FIELD

The present disclosure relates to an inertial measurement apparatus, and more particularly to an inertial measurement apparatus capable of reducing a decrease in measurement accuracy due to a temperature change.

### BACKGROUND ART

A technique has been proposed in which an inertial measurement unit (IMU: inertial measurement apparatus) is mounted on a moving object such as a drone, and various operations related to movement are controlled on the basis of acceleration and angular velocity that are results of detection by the IMU.

Furthermore, a technique has been proposed in which, when an IMU and an atmospheric pressure sensor are used in combination in a drone, the IMU and the atmospheric pressure sensor are provided separately in order to reduce a temperature change generated by rotary wings of the drone (refer to Patent Document 1).

### CITATION LIST

### PATENT DOCUMENT

Patent Document 1: Japanese Patent Application Laid-Open No. 2018-039507

### SUMMARY OF THE INVENTION

### PROBLEMS TO BE SOLVED BY THE INVENTION

Meanwhile, a main body unit of the drone is rapidly cooled by airflow generated along with movement. It is known that, in a case where the IMU described above is provided inside a main body of the drone, the IMU provided inside the main body unit is also rapidly cooled along with the cooling of the main body, causing a decrease in measurement accuracy.

Even if the technique of Patent Document 1 is used, the IMU is rapidly cooled by the airflow generated along with the movement, and thus it is not possible to avoid a decrease in the measurement accuracy of the IMU.

The present disclosure has been made in view of such circumstances, and an object thereof is to reduce a decrease in measurement accuracy due to a change in temperature of an IMU.

### SOLUTIONS TO PROBLEMS

An inertial measurement apparatus according to one aspect of the present disclosure includes an inertial measurement unit (IMU) that detects angular velocity and acceleration, an IMU fixing substrate having a recess in which the IMU is embedded and fixed, and a part that functions as a lid of the recess.

In one aspect of the present disclosure, the inertial measurement unit (IMU) that detects angular velocity and acceleration is embedded and fixed in the IMU fixing substrate, and the recess is lidded with a predetermined part.

### BRIEF DESCRIPTION OF DRAWINGS

Fig. 1 is a diagram for describing a configuration example of a drone for describing an overview of the present disclosure.
Fig. 2 is a diagram describing a principle in which an error occurs in an inertial measurement apparatus.
Fig. 3 is a diagram describing an overview of an inertial measurement apparatus to which the technology of the present disclosure is applied.
Fig. 4 is an external view describing a configuration of a drone according to a preferred embodiment of the present disclosure.
Fig. 5 is a top view and side view of the drone in Fig. 4.
Fig. 6 is a diagram describing a configuration example of the inertial measurement apparatus in Fig. 5.
Fig. 7 is an exploded view of the inertial measurement apparatus in Fig. 5.
Fig. 8 is a diagram describing a first modification of the inertial measurement apparatus in Fig. 5.
Fig. 9 is a diagram describing a second modification of the inertial measurement apparatus in Fig. 5.
Fig. 10 is a diagram describing a third modification of the inertial measurement apparatus in Fig. 5.
Fig. 11 is a diagram describing a fourth modification of the inertial measurement apparatus in Fig. 5.
Fig. 12 is an external view describing a configuration example of a test apparatus for an inertial measurement apparatus.
Fig. 13 is an exploded view of the test apparatus for the inertial measurement apparatus in Fig. 12.
Fig. 14 is a diagram describing application examples of the inertial measurement apparatus in Fig. 5.
Fig. 15 is an external perspective view describing a configuration example of a test clip for the inertial measurement apparatus in Fig. 14.
Fig. 16 is a side view describing the configuration example of the test clip for the inertial measurement apparatus in Fig. 14.

### MODE FOR CARRYING OUT THE INVENTION

Hereinafter, a preferred embodiment of the present disclosure will be described in detail with reference to the accompanying drawings. Note that, in the present specification and drawings, components having substantially the same functional configuration are denoted by the same reference signs, and redundant description is omitted.

Hereinafter, modes for carrying out the present technology will be described. Description will be given in the following order.
1. Overview of present disclosure
2. Preferred embodiment
3. First modification
4. Second modification
5. Third modification
6. Fourth modification
7. Application examples

### <<1. Overview of present disclosure>>

### <Decrease in accuracy occurring in IMU mounted on drone>

A moving object represented by a drone or the like is generally equipped with an inertial measurement unit (IMU) for the purpose of detecting an orientation and attitude associated with movement, and correcting a shake associated with vibration of a mounted camera or the like.

The IMU detects angular velocity and acceleration of the drone or camera by using a vibrator or rotor of micro electro mechanical systems (MEMS) type, a gimbal type, or the like.

However, in a case where the IMU is mounted on the drone, a main body unit is cooled by airflow generated by outside air along with the movement, a rapid temperature change occurs, and accordingly, a rapid temperature change also occurs inside the main body. It is known that, then, measurement accuracy of the IMU mounted inside decreases due to the rapid temperature change.

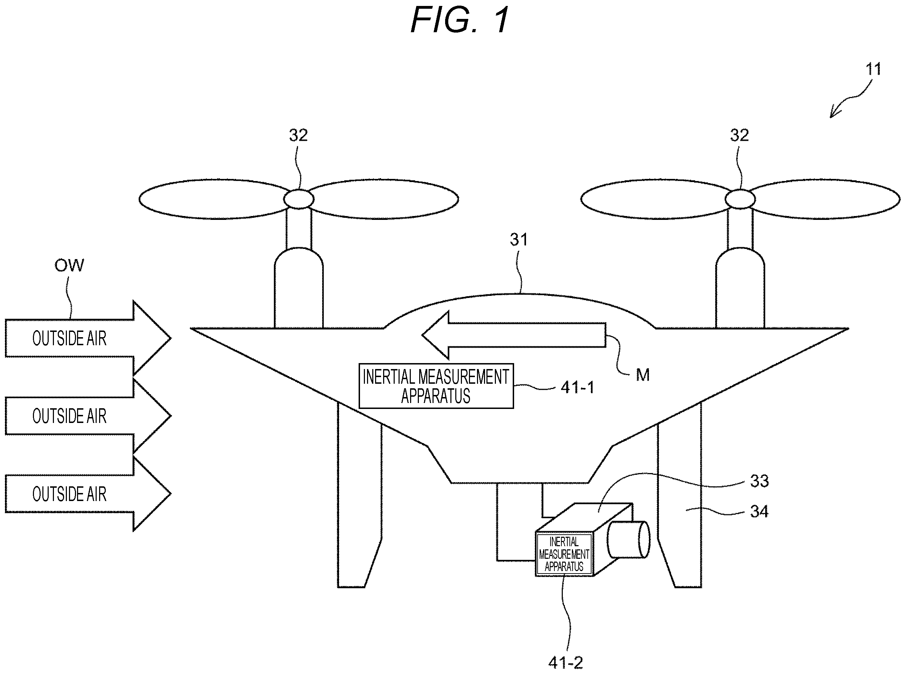

More specifically, as illustrated in Fig. 1, a drone 11 includes a main body unit 31, rotary wings 32, a camera 33, and legs 34.

The main body unit 31 constitutes an outer shape, and incorporates various control devices (not illustrated) and an inertial measurement apparatus 41-1, and is provided with four rotary wings 32.

The drone 11 is configured to be able to ascend or descend by buoyancy generated by rotation of the four rotary wings 32 provided on the main body unit 31, and fly while changing orientation thereof in various directions by adjusting rotational frequency of the four rotary wings 32.

The camera 33 including, for example, a complementary metal oxide semiconductor (CMOS) image sensor or charge coupled device (CCD) image sensor is provided below the main body unit 31 of the drone 11, and is able to capture an image of a scene during flight.

The main body unit 31 and the camera 33 include inertial measurement apparatuses 41-1 and 41-2 therein, respectively.

The inertial measurement apparatus 41-1 is provided inside the main body unit 31, detects orientation and attitude of the drone 11, and supplies the detected orientation and attitude to the control devices (not illustrated). Movement of the drone 11 is controlled by the control devices (not illustrated) on the basis of the orientation and attitude that are results of the detection by the inertial measurement apparatus 41-1.

The inertial measurement apparatus 42-2 is provided around or inside the camera 33, and, when the camera 33 captures an image, detects a shake of the camera 33 that occurs along with rotation of the rotary wings 32 of the drone 11 and movement of the drone 11. In the camera 33, the shake is corrected on the basis of the shake that is a result of the detection by the inertial measurement apparatus 42-2.

Note that basic configurations of the inertial measurement apparatuses 41-1 and 41-2 are the same, and are common in that both have a function of detecting acceleration and angular velocity. Therefore, hereinafter, in a case where it is not particularly necessary to distinguish the inertial measurement apparatuses 41-1 and 41-2 from each other, the inertial measurement apparatuses are simply referred to as an inertial measurement apparatus 41, and other configurations are also referred to in a similar manner.

The legs 34 have a frame-like configuration and are provided on a lower portion of the main body unit 31, and are configured to have the drone 11 to stand alone on a ground when the main body unit 31 of the drone 11 is not floating with buoyancy generated by the rotary wings 32, and, to prevent the camera 33 below the main body unit 31 from interfering with the ground when the drone 11 stands alone.

### <Configuration example of inertial measurement apparatus in Fig. 1>

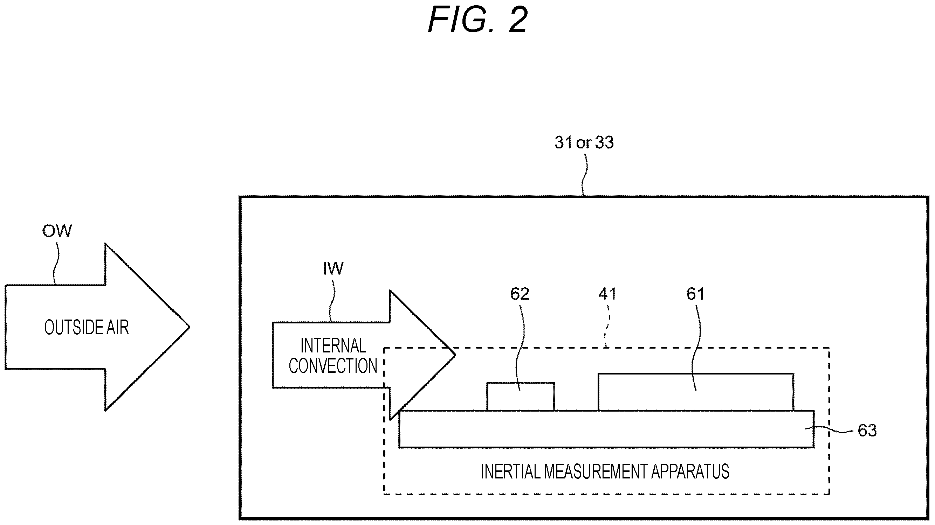

Here, a configuration example of the inertial measurement apparatus 41 will be described with reference to Fig. 2. The inertial measurement apparatus 41 includes a control integrated circuit (IC) 61, an inertial measurement unit (IMU) 62, and a substrate 63.

That is, the inertial measurement apparatus 41 has a configuration in which the control IC 61 and the IMU 62 are provided on the substrate 63.

The IMU 62 detects an angular velocity and acceleration associated with movement of the drone 11, and outputs a detection result to the control IC 61.

The control IC 61 includes a processor, a memory, and the like that are generated on a wafer subjected to a semiconductor process, and controls an entire operation of the inertial measurement apparatus 41. Furthermore, the control IC 61 detects an orientation and attitude of the main body unit 31 of the drone 11 and a shake of the camera 33 on the basis of the acceleration and angular velocity that are results of the detection by the IMU 62, and outputs the orientation and attitude and the shake to a control block (not illustrated).

Ascending or descending and orientation and attitude of the drone 11 is controlled by rotation of the four rotary wings 32 being controlled on the basis of the orientation and attitude of the main body unit 31, the orientation and attitude being supplied from the inertial measurement apparatus 41. Furthermore, the camera 33 corrects the shake on the basis of a shake supplied from the inertial measurement apparatus 41 and captures an image.

Here, for example, a case where the drone 11 in Fig. 1 is flying in a direction of an arrow M in the drawing will be considered.

In this case, as illustrated in Fig. 1, outside air OW facing the arrow M denoting a movement direction is blown to the main body unit 31 of the drone 11.

At this time, a surface of the main body unit 31 is rapidly deprived of heat and cooled by being blown by the outside air OW. An amount of the heat taken from the main body unit 31 by the outside air OW corresponds to a moving speed of the drone 11, and because the drone 11 can move at a relatively high speed, the amount of the heat taken by the outside air OW may increase.

As described above, when the moving speed of the drone 11 reaches a relatively high speed, a rapid temperature change occurs in the main body unit 31 or in the camera 33, and accordingly, internal convection IW occurs in the inside.

When the internal convection IW is blown to the IMU 62 of the inertial measurement apparatus 41, the rotor and vibrator that constitute the IMU 62 shrink due to rapid cooling of temperature thereof.

Furthermore, when the drone 11 moving at the relatively high speed stops at any timing, the outside air OW is not blown to the main body unit 31 this time, by which the internal convection IW disappears.

Then, because the internal convection IW is not blown to the IMU 62 of the inertial measurement apparatus 41, the temperature of the rotor and vibrator that constitute the IMU 62 rapidly changes to a state close to an outside air temperature, by which the rotor and vibrator expand.

That is, in the IMU 62 of the inertial measurement apparatus 41, a rapid temperature change may occur according to the moving speed of the main body unit 31 of the drone 11, and physical properties of the rotor and vibrator that constitute the IMU 62 may change accordingly, by which the measurement accuracy may decrease.

Therefore, in the inertial measurement apparatus of the present disclosure, an IMU fixing substrate having a cavity is prepared separately from the substrate 63, the IMU 62 is embedded in the cavity of the IMU fixing substrate, and the cavity is lidded by being covered with the control IC 61 or the substrate 63.

With this arrangement, the IMU 62 is embedded and sealed in the cavity of the IMU fixing substrate, and the internal convection IW is not blown to the IMU 62. Therefore, a rapid change in temperature of the IMU 62 is reduced, and a decrease in measurement accuracy that occurs along with the flight of the drone 11 is reduced.

### <Overview of inertial measurement apparatus of present disclosure>

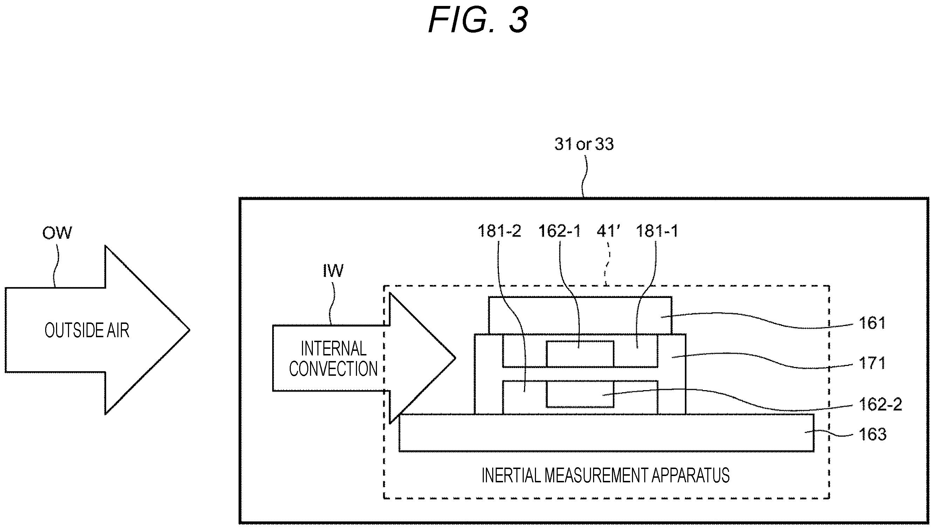

That is, in the present disclosure, an inertial measurement apparatus 41' as illustrated in Fig. 3 is provided instead of the inertial measurement apparatus 41 described above.

As illustrated in Fig. 3, the inertial measurement apparatus 41' includes a control IC 161, IMUs 162-1 and 162-2, a substrate 163, and an IMU fixing substrate 171.

Note that the control IC 161, the IMUs 162-1 and 162-2, and the substrate 163 are configurations corresponding to the control IC 61, IMU 62, and substrate 63 in Fig. 2, respectively, and thus description thereof is omitted. Furthermore, in Fig. 3, the IMUs 162-1 and 162-2 are provided to obtain two results each of detection of acceleration and angular velocity and obtain one detection result with predetermined processing using the two detection results, by which detection accuracy can be improved.

That is, the inertial measurement apparatus 41' in Fig. 3 is obtained by newly providing the IMU fixing substrate 171 and the two IMUs 162 to the inertial measurement apparatus 41 in Fig. 2.

In the IMU fixing substrate 171, recesses (cavities) 181-1 and 181-2 are provided on an upper surface and lower surface in the drawing, respectively, and the IMU 162-1 is provided so as to be embedded on a bottom portion of the recess 181-1 in an upper part in the drawing, and the IMU 162-2 is provided so as to be embedded on a bottom portion of the recess 181-2 in a lower part in the drawing. Note that the bottom portion of the recess 181-2 in Fig. 3 is an upper-surface portion of the recess 181-2 of the IMU fixing substrate 171 in the drawing.

The recess 181-1 is an opening smaller than the control IC 161. The control IC 161 larger than the opening of the recess 181-1 is placed on and bonded to an upper portion of the IMU fixing substrate 171, by which the control IC 161 functions as a lid of the recess 181-1. Thus, the IMU 162-1 is embedded and sealed inside the recess 181-1.

The recess 181-2 is bonded such that the opening faces the substrate 163. With such a configuration, the substrate 163 functions as a lid of the recess 181-2, and the IMU 162-2 is embedded and sealed inside the recess 181-2.

With such a configuration in which the IMUs 162-1 and 162-2 are embedded and sealed inside the recesses 181-1 and 181-2, respectively, the internal convection IW is not directly blown to the IMUs 162-1 and 162-2 even if the internal convection IW occurs inside the main body unit 31 or camera 33 along with the movement of a drone 111, and thus a rapid temperature change can be reduced.

As a result, it is possible to reduce a decrease in measurement accuracy of the IMUs 162-1 and 162-2 due to a rapid temperature change.

### <<2. Preferred embodiment>>

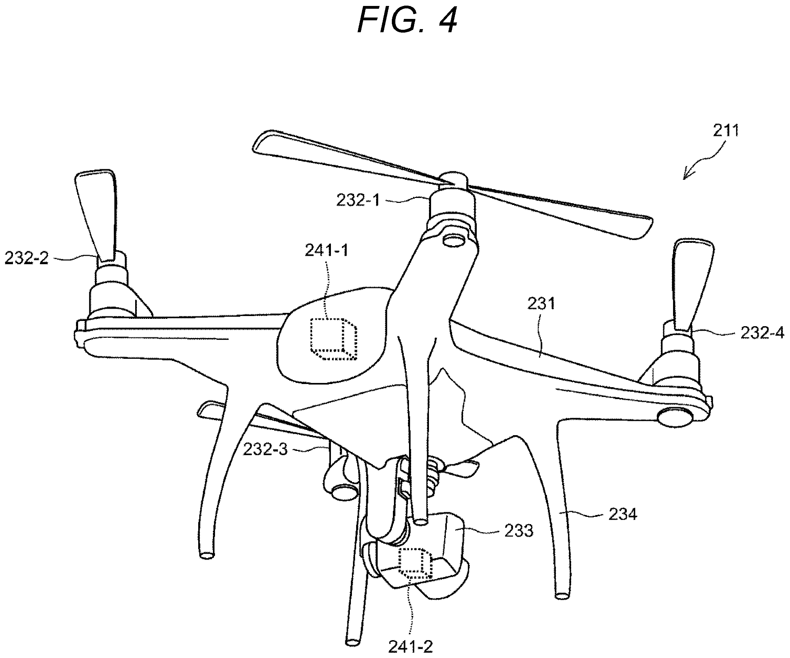

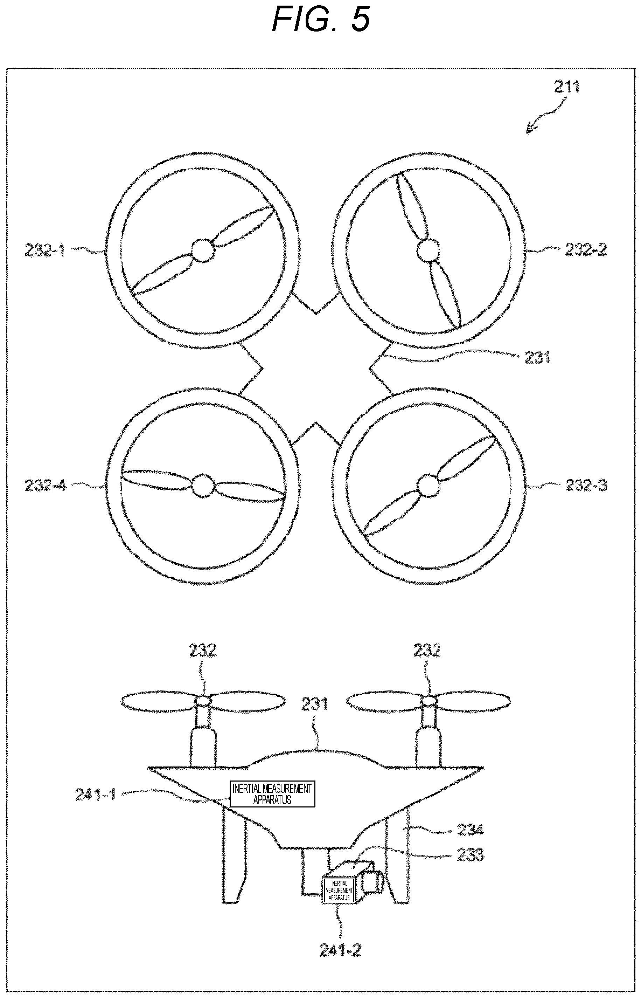

Next, a configuration example of a drone to which the technology of the present disclosure is applied will be described with reference to Figs. 4 and 5.

Note that Fig. 4 illustrates an external perspective view of a drone 211, an upper part in Fig. 5 illustrates a top view of the drone 211, and a lower part in Fig. 5 illustrates a side view of the drone 211. Furthermore, Fig. 4 is a detailed diagram of an appearance of the drone 211, and the top view and side view in Fig. 5 are schematic diagrams with respect to Fig. 4.

The drone 211 includes a main body unit 231, rotary wings 232-1 to 232-4, a camera 233, and legs 234.

Note that the main body unit 231, rotary wings 232-1 to 232-4, camera 233, and legs 234 of the drone 211 in Figs. 4 and 5 are configurations corresponding to the main body unit 31, rotary wings 32, camera 33, and legs 34 in Fig. 1, respectively.

That is, the main body unit 231 constitutes an outer shape of the drone 211, and incorporates various control devices (not illustrated) and an inertial measurement apparatus 241-1, and is provided with four rotary wings 232-1 to 232-4.

The drone 211 is configured to be able to ascend or descend by buoyancy generated by rotation of the four rotary wings 232-1 to 232-4 provided on the main body unit 231, and fly while changing orientation thereof in various directions by adjusting rotational frequency of the four rotary wings 232-1 to 232-4.

The camera 233 including, for example, a complementary metal oxide semiconductor (CMOS) image sensor or charge coupled device (CCD) image sensor is provided below the main body unit 231 of the drone 211, and is able to capture an image of a scene during flight.

The main body unit 231 and the camera 233 include inertial measurement apparatuses 241-1 and 241-2 therein, respectively.

The inertial measurement apparatus 241-1 is provided inside the main body unit 231, measures acceleration and angular velocity necessary for measuring an orientation and attitude of the drone 211, and supplies the measured acceleration and angular velocity to a control unit (not illustrated). Movement of the drone 211 is controlled by the orientation and attitude obtained on the basis of the angular velocity and acceleration that are results of the measurement by the inertial measurement apparatus 241-1.

An inertial measurement apparatus 242-2 is provided around or inside the camera 233, and, when the camera 233 captures an image, detects the acceleration and angular velocity necessary for measuring a shake of the camera 233 that occurs along with rotation of the rotary wings 232 of the drone 211 and movement of the drone 211, and the shake is corrected on the basis of a shake obtained by a measurement result.

Note that basic configurations of the inertial measurement apparatuses 241-1 and 241-2 are the same, and are common in that both detect acceleration and angular velocity. Therefore, hereinafter, in a case where it is not particularly necessary to distinguish the inertial measurement apparatuses 241-1 and 241-2 from each other, the inertial measurement apparatuses are simply referred to as an inertial measurement apparatus 241, and other configurations are also referred to in a similar manner.

The legs 234 have a frame-like configuration and are provided on a lower portion of the main body unit 231, and are configured to have the drone 211 to stand alone on a ground when the main body unit 231 of the drone 211 is not floating with buoyancy generated by the rotary wings 232-1 to 232-4 rotating, and, to prevent the camera 233 below the main body unit 231 from interfering with the ground when the drone 211 stands alone.

### <Configuration example of inertial measurement apparatus>

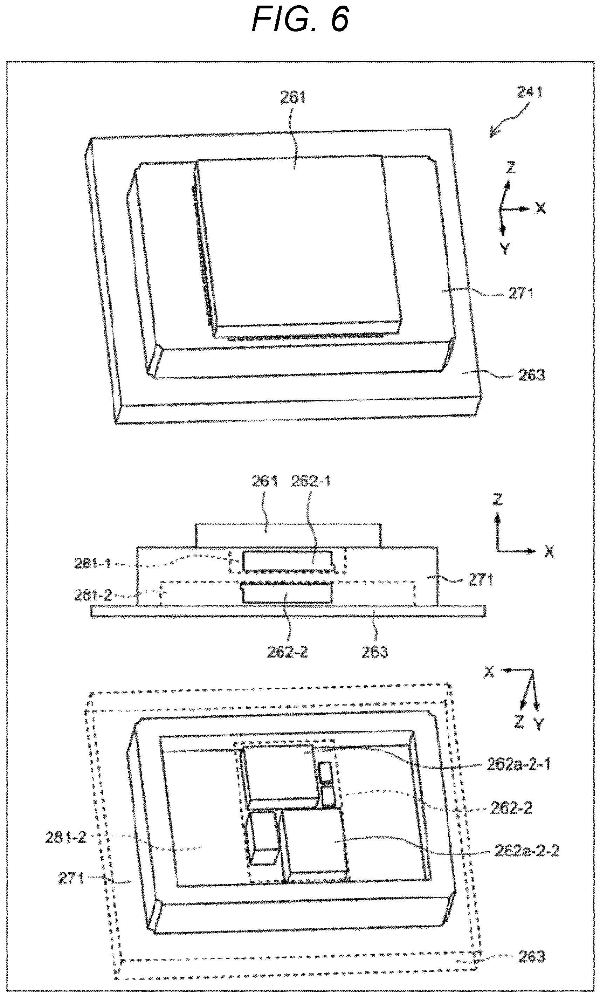

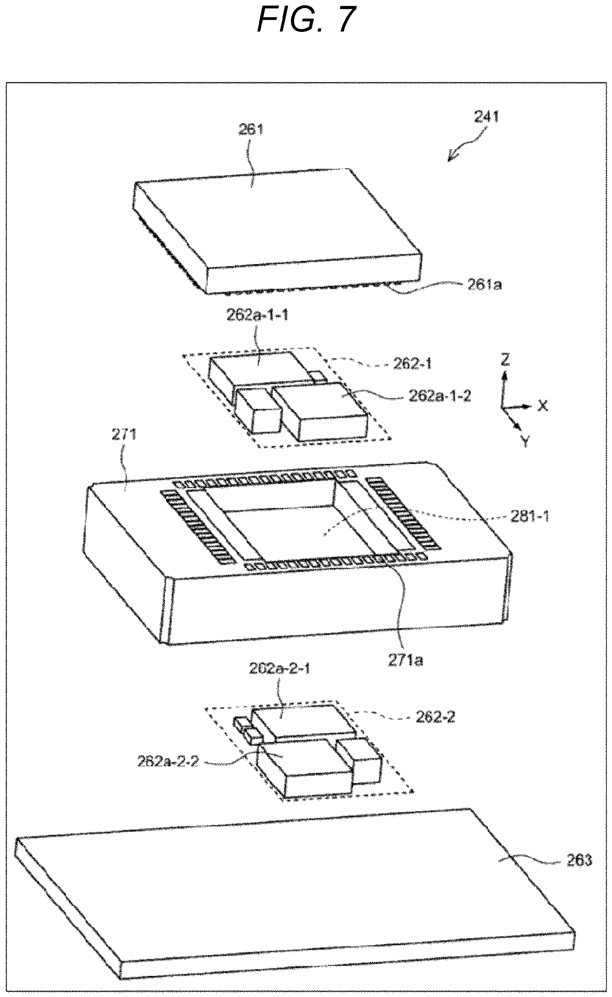

Next, a configuration example of the inertial measurement apparatus 241 will be described with reference to Figs. 6 and 7. Note that, in Fig. 6, the upper part illustrates a top perspective view of the inertial measurement apparatus 241, the middle part illustrates a cross-sectional side view of the inertial measurement apparatus 241, and the lower part illustrates a rear perspective view of the inertial measurement apparatus 241. Furthermore, Fig. 7 is an exploded view of the inertial measurement apparatus 241. Note that, in the lowest part in Fig. 6, a substrate 263 is represented to have a transparent configuration.

The inertial measurement apparatus 241 includes a control IC 261, IMU blocks 262-1 and 262-2, an IMU fixing substrate 271, and the substrate 263.

More specifically, in the inertial measurement apparatus 241, the IMU fixing substrate 271 is placed on and bonded to the substrate 263, and the control IC 261 is placed on and bonded to the IMU fixing substrate 271.

The IMU fixing substrate 271 is, for example, a ceramic substrate, and recesses (cavities) 281-1 and 281-2 are provided on an upper surface side and lower surface thereof. The recess 281-1 is configured so that the IMU block 262-1 is embedded therein, and the recess 281-2 is configured so that the IMU block 262-2 is embedded therein.

The IMU blocks 262-1 and 262-2 are attached back to back with the bottom portions of the recesses 281-1 and 281-2 as boundaries, respectively.

The IMU block 262-1 is provided with two IMUs 262a, which are IMUs 262a-1-1 and 262a-1-2, and the IMU block 262-2 is provided with two IMUs 262a, which are IMUs 262a-2-1 and 262a-2-2.

That is, the inertial measurement apparatus 241 in Figs. 6 and 7 is provided with a total of four IMUs 262a-1-1, 262a-1-2, 262a-2-1, and 262a-2-2. The control IC 261 obtains angular velocity and acceleration of the main body unit 231 or camera 233 of the drone 211 by using results of detection of angular velocity and acceleration by each of the IMUs 262a-1-1, 262a-1-2, 262a-2-1, and 262a-2-2, thereby improving accuracy of a measurement result.

Note that, four or more IMUs 262a may be mounted for improvement of the measurement accuracy, because the measurement accuracy can be improved as larger number of IMUs 262a are mounted, or in a case where priority is given to weight reduction over the measurement accuracy, less than four IMUs 262 may be mounted, in which it is only required that at least one or more IMUs 262a are mounted, for example,.

Because a depth of the recess 281-1 of the IMU fixing substrate 271 is deeper than heights of all circuits, elements, and the like including the IMUs 262a-1-1 and 262a-1-2 that constitute the IMU block 262-1, all the circuits and elements including the IMUs 262a-1-1 and 262a-1-2 that constitute the IMU block 262-1 are disposed in a state of being embedded inside the recess 281-1.

Moreover, the control IC 261 is configured to be larger than an opening of the recess 281-1, is electrically connected in a state where a terminal 261a and a terminal 271a face each other, and is placed and connected so as to cover the opening of the recess 281-1.

With such a configuration, the IMUs 262a-1-1 and 262a-1-2 that constitute the IMU block 262-1 are embedded and sealed inside the recess 281-1.

With this arrangement, even if internal convection IW occurs due to contact with the outside air OW along with movement of the drone 211, the internal convection IW is not directly blown to the IMUs 262a-1-1 and 262a-1-2, by which chances of occurrence of a rapid temperature change can be reduced. As a result, it is possible to reduce a decrease in measurement accuracy of the IMUs 262a-1-1 and 262a-1-2 that occurs due to a rapid temperature change.

Furthermore, because a depth of the recess 281-2 of the IMU fixing substrate 271 is deeper than heights of all circuits, elements, and the like including the IMUs 262a-2-1 and 262a-2-2 that constitute the IMU block 262-2, all the circuits and elements including the IMUs 262a-2-1 and 262a-2-2 that constitute the IMU block 262-2 are disposed in a state of being embedded in the recess 281-2.

Moreover, the recess 281-2 is placed and connected so that an opening of the recess 281-2 is covered by the substrate 263.

With such a configuration, the IMUs 262a-2-1 and 262a-2-2 that constitute the IMU block 262-2 are embedded and sealed in the recess 281-2.

With this arrangement, even if internal convection IW occurs due to contact with the outside air OW along with movement of the drone 211, the internal convection IW is not directly blown to the IMUs 262a-2-1 and 262a-2-2, by which chances of occurrence of a rapid temperature change can be reduced. As a result, it is possible to reduce a decrease in measurement accuracy of the IMUs 262a-2-1 and 262a-2-2 that occurs due to a rapid temperature change.

Note that Fig. 6 illustrates as if the recess 281-2 has a space provided with nothing but the IMUs 262a-2-1 and 262a-2-2. However, this is merely an example in which only the IMUs 262a-2-1 and 262a-2-2 are illustrated, and there actually are other configurations not illustrated.

With the above configuration, in the inertial measurement apparatus 241, for any of the IMUs 262a-1-1, 262a-1-2, 262a-2-1, and 262a-2-2, it is possible to reduce a decrease in measurement accuracy that occurs due to a rapid temperature change along with the movement of the drone 211.

Furthermore, because the inertial measurement apparatus 241 is not provided with a special configuration, such as a heat insulation material, for reducing a rapid temperature change, and includes only essential parts, it is possible to reduce a decrease in measurement accuracy without increasing man-hours and costs related to manufacturing.

Moreover, because a special configuration that is not usually used, such as a heat insulation material, is not added, it is possible to reduce a decrease in measurement accuracy due to a rapid temperature change, without deterioration in power consumption or shortening of flight time or flight distance due to an increase in weight that increases power consumption during a flight of the drone 211 or an increase in size of an apparatus configuration.

Note that there has been described an example in which the IMUs 262a that constitute the inertial measurement apparatus 241 are provided so as to be embedded in the recesses 281-1 and 281-2 of the IMU fixing substrate 271, and the control IC 261 and the substrate 263 are caused to function as lids to seal the IMUs 262a so that the internal convection IW is not blown, by which a decrease in measurement accuracy of the inertial measurement apparatus 241 due to a rapid temperature change is reduced.

However, in addition to the IMUs 262a, another sensor having a possibility of a decrease in measurement accuracy due to a temperature change may be provided so as to be included in the recesses 281-1 and 281-2 of the IMU fixing substrate 271, in order to reduce a decrease in the measurement accuracy of the another sensor.

Examples of the another sensor other than the IMUs 262a include a temperature sensor, an atmospheric pressure sensor, a humidity sensor, and the like. However, in a case where the temperature sensor, the atmospheric pressure sensor, or the humidity sensor is provided in a recess 281 along with the IMUs 262a, measurement cannot be appropriately performed if airtightness is high when the control IC 261 and the substrate 263 function as lids of the recesses 281-1 and 281-2.

Therefore, in such a case, it is necessary to provide, between the control IC 261 and the recess 281-1 or between the substrate 263 and the recess 281-2, a gap that allows air to flow to such an extent that the internal convection IW is not directly blown.

### <<3. First modification>>

There has been described a configuration example in which the control IC 261 covers the recess 281-1 to function as a lid. However, for example, in a case where the control IC 261 is necessary to be disposed at a position other than a position of the opening of the recess 281-1 for convenience of layout, another configuration may be used to function as a lid of the opening of the recess 281-1.

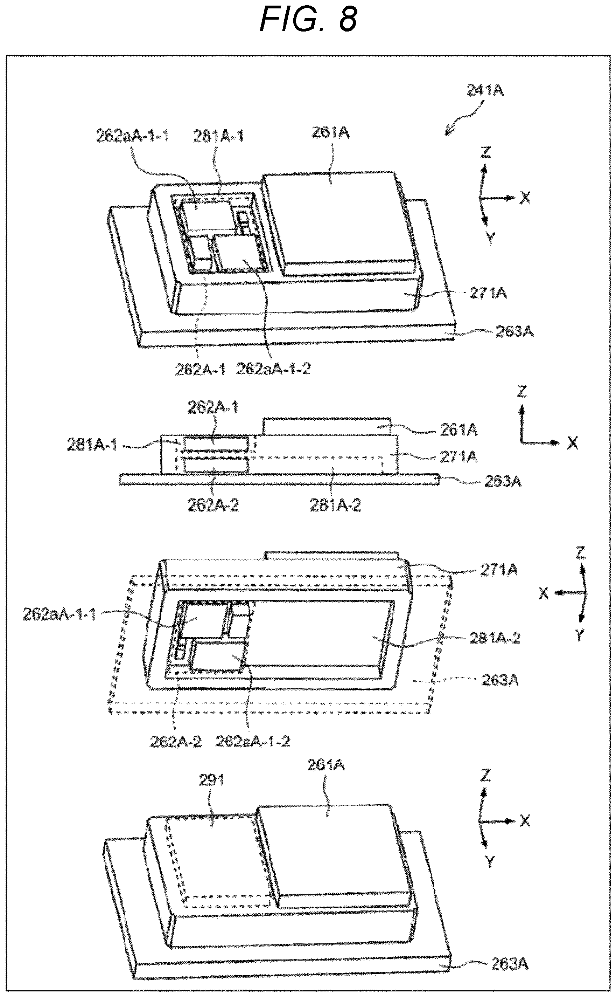

Fig. 8 illustrates a configuration example of an inertial measurement apparatus 241A in which a lid of an opening of a recess 281A-1 includes, for example, a label in a form of a sheet.

The inertial measurement apparatus 241A in Fig. 8 includes a control IC 261A, IMU blocks 262A-1 and 262A-2, a substrate 263A, an IMU fixing substrate 271A, and a label 291.

Note that the control IC 261A, IMU blocks 262A-1 and 262A-2, substrate 263A, and IMU fixing substrate 271A in the inertial measurement apparatus 241A in Fig. 8 are configurations corresponding to the control IC 261, IMU blocks 262-1 and 262-2, substrate 263, and IMU fixing substrate 271 in the inertial measurement apparatus 241 in Figs. 6 and 7, respectively.

Furthermore, in order from the top, Fig. 8 illustrates a top perspective view, cross-sectional side view, and rear perspective view of the inertial measurement apparatus 241A in which the label 291 is not attached, and a top perspective view of the inertial measurement apparatus 241A in which the label 291 is attached so as to cover an opening of a recess 281A-1.

That is, the inertial measurement apparatus 241A in Fig. 8 is long in a lateral direction in the drawing as a whole with respect to the inertial measurement apparatus 241 in Figs. 6 and 7, and the control IC 261A is disposed at a position different from a position of the recess 281A-1 on the IMU fixing substrate 271A.

Therefore, the control IC 261A cannot function as a lid with respect to the opening of the recess 281A-1.

Therefore, in the inertial measurement apparatus 241A in Fig. 8, the label 291 in a form of a sheet is attached to the opening of the recess 281A-1 to function as a lid, and the IMU block 262A-1 is embedded and sealed in the recess 281A-1.

With such a configuration, even if the internal convection IW occurs due to contact with the outside air OW along with movement of the drone 211, the internal convection IW is not directly blown to IMUs 262aA-1-1 and 262aA-1-2 in the IMU block 262A-1, and thus a rapid temperature change can be reduced. As a result, it is possible to reduce a decrease in measurement accuracy of the IMUs 262aA-1-1 and 262aA-1-2 that occurs due to a rapid temperature change.

### <<4. Second modification>>

There has been described a configuration example of the inertial measurement apparatus 241A in which the control IC 261A is disposed at a position other than a position of the recess 281-1 for convenience of layout. However, a label in a form of a sheet may be attached to the opening of the recess 281-1 to function as a lid, in a case where, for example, a large number of IMUs 262a are provided in the IMU blocks 262, by which the opening of the recess 281-1 that covers the IMU block is larger than the control IC 261A.

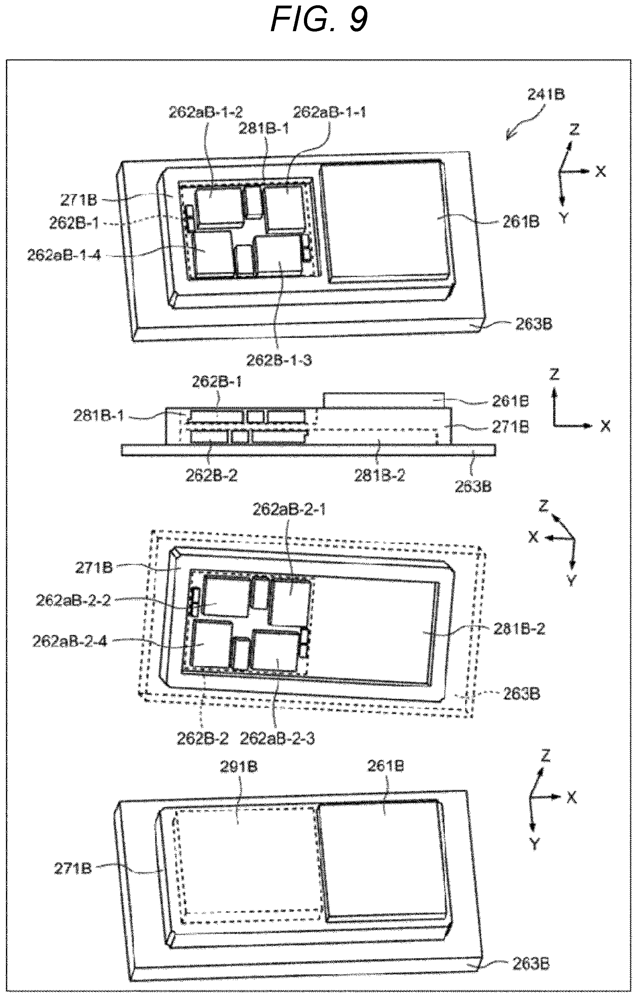

Fig. 9 illustrates a configuration example of an inertial measurement apparatus 241B in which an opening of a recess 281B-1 is covered by a configuration including, for example, a label in a form of a sheet.

The inertial measurement apparatus 241B in Fig. 9 includes a control IC 261B, IMU blocks 262B-1 and 262B-2, a substrate 263B, an IMU fixing substrate 271B, and a label 291B.

Note that the control IC 261B, IMU blocks 262B-1 and 262B-2, substrate 263B, IMU fixing substrate 271B, and label 291B in the inertial measurement apparatus 241B in Fig. 9 are configurations corresponding to the control IC 261A, IMU blocks 262A-1 and 262A-2, substrate 263A, IMU fixing substrate 271A, and label 291 in the inertial measurement apparatus 241A in Fig. 8, respectively.

Furthermore, in order from the top, Fig. 9 illustrates a top perspective view, cross-sectional side view, and rear perspective view of the inertial measurement apparatus 241B in which the label 291B is not attached, and a top perspective view of the inertial measurement apparatus 241B in which the label 291B is attached so as to cover an opening of a recess 281B-1.

That is, the inertial measurement apparatus 241B in Fig. 9 is long in a lateral direction in the drawing as a whole with respect to the inertial measurement apparatus 241 in Figs. 6 and 7.

Furthermore, the IMU block 262B-1 embedded in the recess 281B-1 is provided with four IMUs 262aB-1-1 to 262aB-1-4, and thus, the IMU block 262B-1 is larger than the IMU block 262A-1 in Fig. 8.

Therefore, the opening of the recess 281B-1 is also larger than the opening of the recess 281A-1 in Fig. 8 and, moreover, larger than the control IC 261B. With such a configuration, the control IC 261B cannot be disposed so as to close the opening of the recess 281B-1, and thus cannot function as a lid.

Therefore, the control IC 261B is disposed at a position different from a position of the recess 281B-1 on the IMU fixing substrate 271B.

Furthermore, in the inertial measurement apparatus 241B in Fig. 9, the label 291B in a form of a sheet is attached to the opening of the recess 281B-1 to function as a lid, and the IMU block 262B-1 is embedded in the recess 281B-1.

With such a configuration, even if the internal convection IW occurs due to contact with the outside air OW along with movement of the drone 211, the internal convection IW is not directly blown to the IMUs 262aB-1-1 to 262aB-1-4 in the IMU block 262B-1, and thus a rapid temperature change can be reduced. As a result, it is possible to reduce a decrease in measurement accuracy of the IMUs 262aB-1-1 to 262aA-1-4 that occurs due to a rapid temperature change.

Note that, depending on a size of the opening of the recess 281B-1, the label 291B may be disposed so as to function as a lid of the recess 281B-1, closing the opening of the recess 281B-1 in a case where the opening of the recess 281B-1 is larger than the control IC 261B, and the control IC 261B may be disposed so as to function as the lid of the recess 281B-1, closing the opening of the recess 281B-1 in a case where the opening of the recess 281B-1 is smaller than the control IC 261B.

### <<5. Third modification>>

There has been described an example in which the IMU blocks 262-1 and 262-2 are formed in the recesses 281-1 and 281-2 provided on an upper surface and lower surface of the IMU fixing substrate 271. However, the IMU block may be formed in the recess provided only on the upper surface of the IMU fixing substrate.

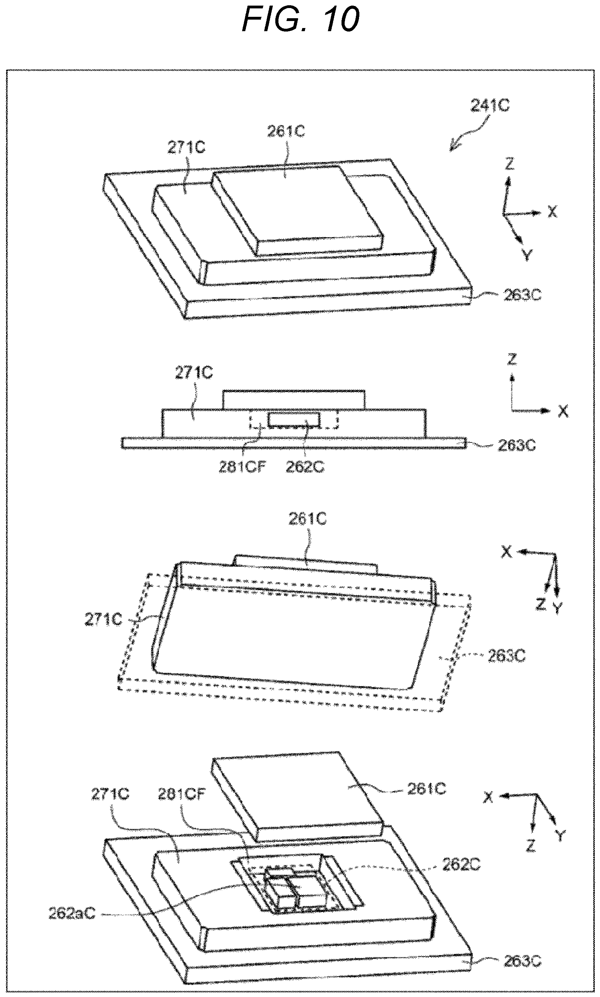

Fig. 10 illustrates a configuration example of an inertial measurement apparatus 241C in which a recess 281CF is provided only on an upper surface of an IMU fixing substrate 271C.

The inertial measurement apparatus 241C in Fig. 10 includes a control IC 261C, an IMU block 262C, a substrate 263C, and the IMU fixing substrate 271C.

Note that the control IC 261C, IMU block 262C, substrate 263C, and IMU fixing substrate 271C in the inertial measurement apparatus 241C in Fig. 10 are configurations corresponding to the control IC 261, IMU blocks 262, substrate 263, and IMU fixing substrate 271 in the inertial measurement apparatus 241 in Figs. 6 and 7, respectively.

Furthermore, in order from the top, Fig. 10 illustrates a top perspective view, cross-sectional side view, and rear perspective view of the inertial measurement apparatus 241C, and a top perspective view of the inertial measurement apparatus 241C in which the control IC 261C is removed from an opening of the recess 281C to an upper surface.

That is, the inertial measurement apparatus 241C in Fig. 10 has a configuration in which the IMU block 262C is disposed in the recess 281CF provided only on the upper surface of the IMU fixing substrate 271C of the inertial measurement apparatus 241 in Figs. 6 and 7.

In the inertial measurement apparatus 241C in Fig. 10, the control IC 261C is disposed on the opening of the recess 281CF to function as a lid of the recess 281CF, by which the IMU block 262C is embedded and sealed in the recess 281CF.

With such a configuration, even if the internal convection IW occurs due to contact with the outside air OW along with movement of the drone 211, the internal convection IW is not directly blown to an IMU 262aC in the IMU block 262C, and thus a rapid temperature change can be reduced. As a result, it is possible to reduce a decrease in measurement accuracy of the IMU 262aC generated due to a rapid temperature change.

### <<6. Fourth modification>>

There has been described an example in which the IMU blocks 262-1 and 262-2 are formed in the recesses 281-1 and 281-2 provided on an upper surface and lower surface of the IMU fixing substrate 271. However, the IMU block may be formed in the recess provided only on the lower surface of the IMU fixing substrate.

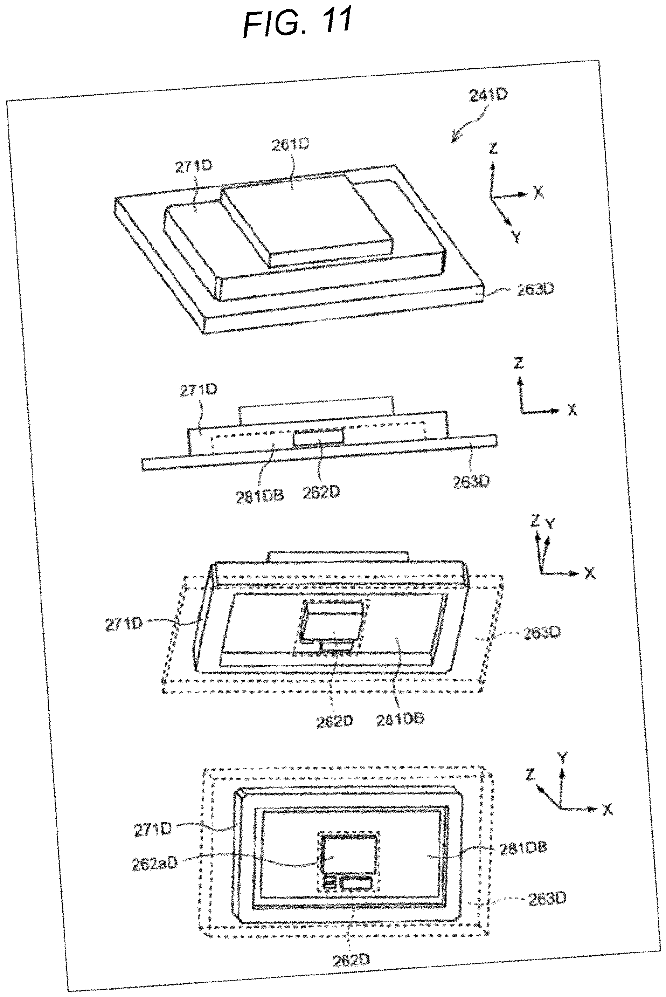

Fig. 11 illustrates a configuration example of an inertial measurement apparatus 241D in which a recess 281DB is provided only on a lower surface of an IMU fixing substrate 271D.

The inertial measurement apparatus 241D in Fig. 11 includes a control IC 261D, an IMU block 262D, a substrate 263D, and the IMU fixing substrate 271D.

Note that the control IC 261D, IMU block 262D, substrate 263D, and IMU fixing substrate 271D in the inertial measurement apparatus 241D in Fig. 11 are configurations corresponding to the control IC 261, IMU blocks 262, substrate 263, and IMU fixing substrate 271 in the inertial measurement apparatus 241 in Figs. 6 and 7, respectively.

Furthermore, in order from the top, Fig. 11 illustrates a top perspective view, cross-sectional side view, rear perspective view, and rear view of the inertial measurement apparatus 241D.

That is, the inertial measurement apparatus 241D in Fig. 11 has a configuration in which the IMU block 262D is disposed in the recess 281DB provided only on the lower surface of the IMU fixing substrate 271D of the inertial measurement apparatus 241 in Figs. 6 and 7.

In the inertial measurement apparatus 241D in Fig. 11, the substrate 263D is disposed on an opening of the recess 281CB to function as a lid of the recess 281DB, by which the IMU block 262D is embedded and sealed in the recess 281DB.

With such a configuration, even if the internal convection IW occurs due to contact with the outside air OW along with movement of the drone 211, the internal convection IW is not directly blown to an IMU 262aD in an IMU block 262DB, and thus a rapid temperature change can be reduced. As a result, it is possible to reduce a decrease in measurement accuracy of the IMU 262aD generated due to a rapid temperature change.

### <<7. Application examples>>

There has been described the inertial measurement apparatus 241 in which the IMU fixing substrate 271 is provided, the recesses 281-1 and 281-2 are formed on the upper surface and lower surface of the IMU fixing substrate 271, IMU blocks 261-1 and 261-2 are provided in the recesses 281-1 and 281-2, the control IC 261, the label 291, or the like closes the recess 281-1 to function as a lid of the recess 281-1, and the substrate 263 functions as a lid of the recess 281-2, so that the internal convection IW is not blown to the IMUs 262a, by which a decrease in measurement accuracy due to a rapid temperature change can be reduced.

By the way, an inertial measurement apparatus 241 on which adjustment inspection and operation confirmation has been performed after being manufactured is shipped.

At this time, the inertial measurement apparatus 241 is necessary to be installed in a test apparatus to perform the adjustment inspection.

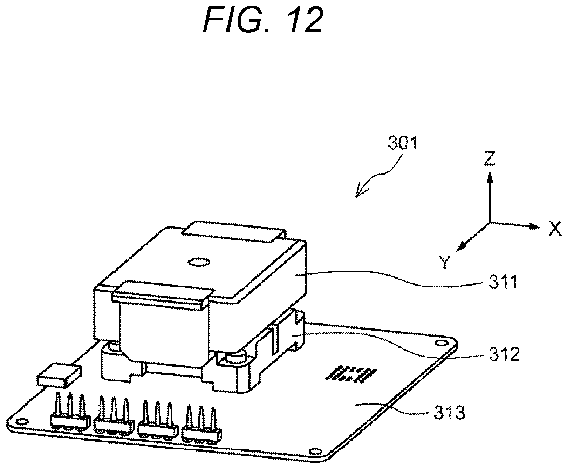

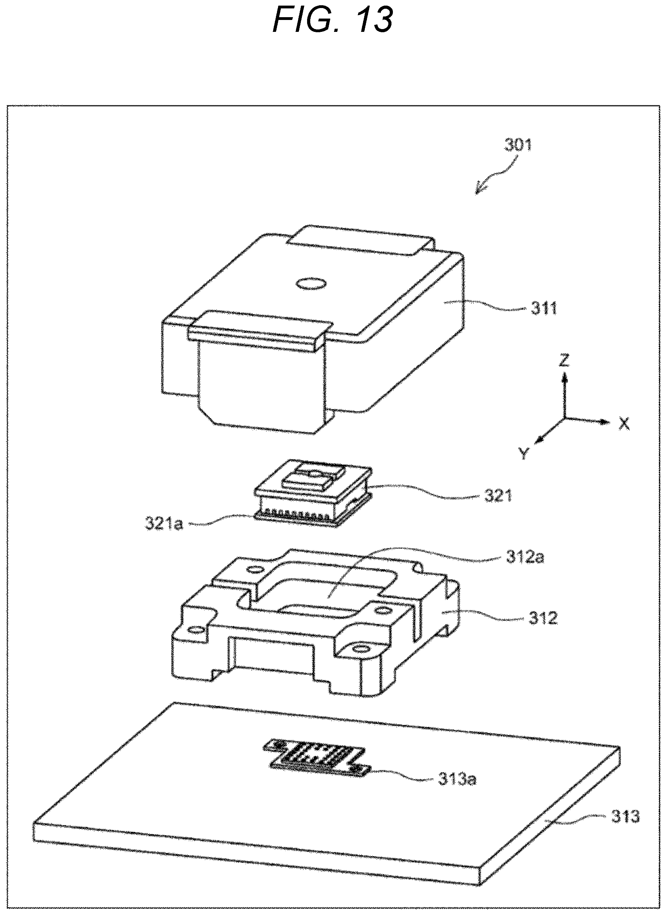

Figs. 12 and 13 illustrate a configuration example of a test apparatus 301 for an inertial measurement apparatus. Note that Fig. 12 is an external perspective view of the test apparatus 301, and Fig. 13 is an exploded perspective view of the test apparatus 301.

That is, the test apparatus 301 includes a lid part 311, a socket 312, and a substrate 313.

In the socket 312, there is formed a hole 312a into which an inertial measurement apparatus 321 to be subjected to the adjustment inspection can be inserted, and the hole 312a is configured to be connected to the substrate 313. On the substrate 313, a terminal 313a is formed on a position corresponding to a position of the hole 312a in the socket 312.

For this reason, as illustrated in Fig. 13, in a case where the inertial measurement apparatus 321 to be subjected to the adjustment inspection is inserted into the hole 312a of the socket 312, a terminal 321a is necessary to be provided at a position facing the terminal 313a, that is, at a bottom portion of the inertial measurement apparatus 321.

In this state, when the lid part 311 is placed on the socket 312 so as to function as a lid, the lid part 311 presses the inertial measurement apparatus 321 in a downward direction as viewed in the drawing to fix the terminal 321a and the terminal 313a together in an electrically connected state.

As described above, when the inertial measurement apparatus 321 to be subjected to the adjustment inspection is electrically connected to and fixed to the substrate 313 via the terminals 321a and 313a, electrical adjustment inspection can be performed via the substrate 313.

By the way, in a case of using the test apparatus 301 in Figs. 12 and 13, it is necessary to open the lid part 311 each time the inertial measurement apparatus 321 is replaced, in order to maintain a state where the terminal 321a provided on the bottom portion of the inertial measurement apparatus 321 and the terminal 313a of the substrate 313 are connect to each other.

For this reason, in a case where it is necessary to perform adjustment inspection on a large number of inertial measurement apparatuses 321, it takes time and effort to open and close the lid part 311 and replace the inertial measurement apparatuses 321, and thus a long time is required for the adjustment inspection of the large number of inertial measurement apparatuses 321.

Therefore, test terminals may be provided on facing side-surface portions of the main body of the inertial measurement apparatus, so that the test terminals can be electrically connected by a clip-like test clip, by which the test clip can be easily and quickly attached to and detached from the inertial measurement apparatus to be subjected to the adjustment inspection.

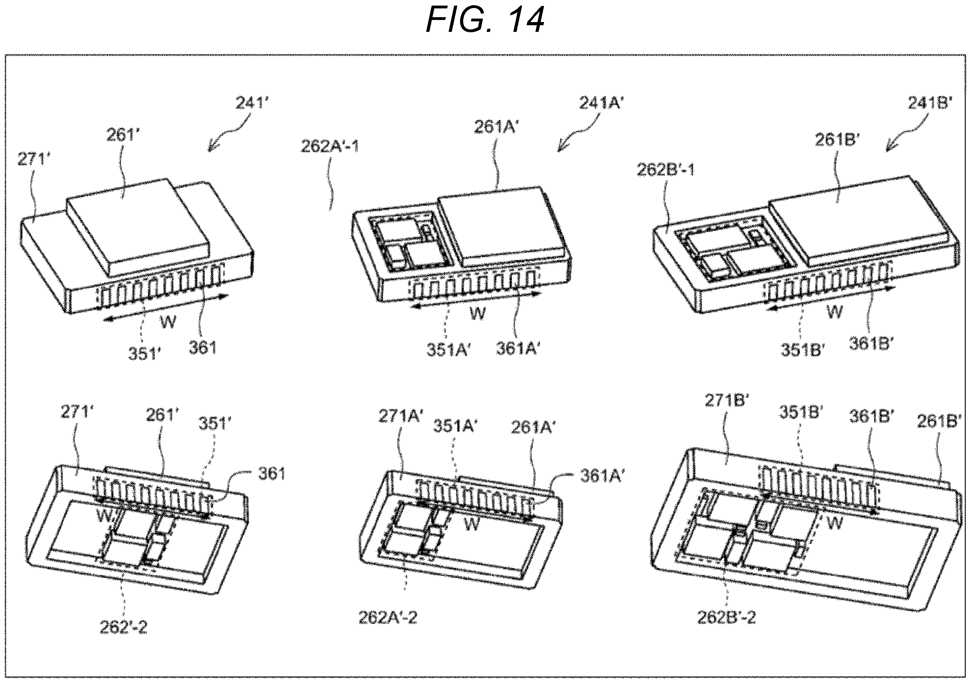

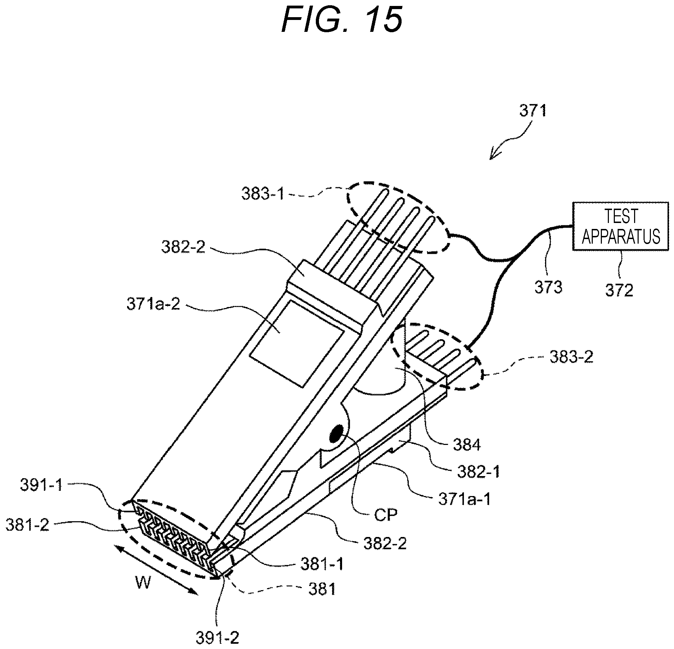

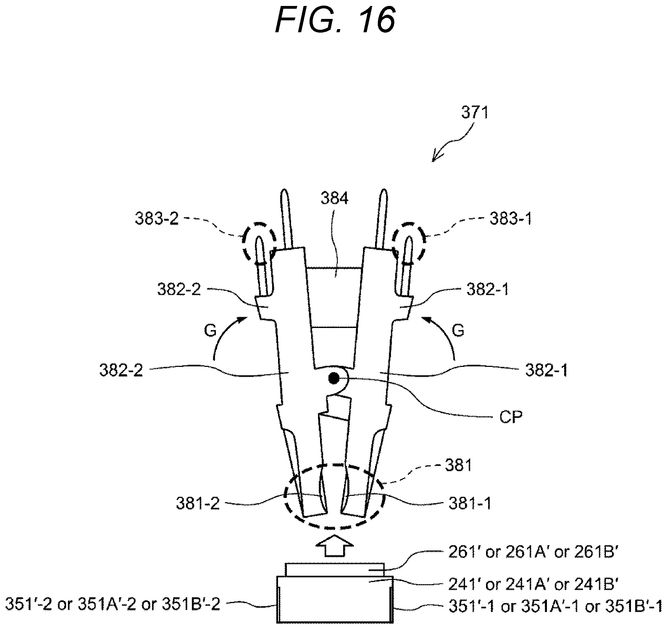

Fig. 14 is top perspective views and rear perspective views of each of inertial measurement apparatuses 241', 241 A', and 241B' in which test terminals are provided on side-surface portions facing each other, Fig. 15 is an external perspective view of a corresponding test clip 371, and Fig. 16 is a side view of the test clip 371.

Note that Fig. 14 illustrates top perspective views and rear perspective views of the inertial measurement apparatuses 241', 241 A', and 241B' in order from the left, where the top perspective views are illustrated in the upper part and the rear perspective views are illustrated in the lower part.

Basic configurations of each of the inertial measurement apparatuses 241', 241 A', and 241B' in Fig. 14 correspond to the configurations of the inertial measurement apparatus 241 in Figs. 6 and 7, the inertial measurement apparatus 241A in Fig. 8, and the inertial measurement apparatus 241B in Fig. 9, respectively.

The inertial measurement apparatuses 241', 241 A', and 241B' in Fig. 14 are different from the inertial measurement apparatus 241 in Figs. 6 and 7, the inertial measurement apparatus 241A in Fig. 8, and the inertial measurement apparatus 241B in Fig. 9 in that a test terminal 351', 351A', or 351B' is provided on the side-surface portions thereof.

Note that Fig. 14 illustrates an example in which the test terminals 351', 351A', and 351B' are provided on single side-surface portions of the inertial measurement apparatuses 241', 241 A', and 241B', respectively. However, a similar configuration is provided on opposite side surfaces thereof (not illustrated).

Hereinafter, in a case where it is necessary to distinguish both side surfaces of the test terminals 351', 351A', and 351B' from each other, test terminals on one side-surface portion are also referred to as test terminals 351'-1, 351A'-1, and 351B'-1, and test terminals on another side-surface portions are also referred to as test terminals 351'-2, 351A'-2, and 351B'-2.

The test terminals 351', 351A', and 351B' include eight each of electrodes 361', 361A', and 361B', respectively, and are formed across a width W at the same pitch. Note that the number of the electrodes 361', 361A', and 361B' being eight is an example, and there may be any other number of electrodes 361', 361A', and 361B'.

Furthermore, the test clip 371 in Figs. 15 and 16 includes seesaws 371a-1 and 371a-2 of which ends are pivotable about an axis CP.

Each of the seesaws 371a-1 and 371a-2 is provided with a terminal 381-1 or 381-2, a knob 382-1 or 382-2, and a connection terminal 383-1 or 383-2, and a spring 384 is provided so as to connect the ends on a side close to the connection terminals 383-1 and 383-2. The terminals 381-1 and 381-2 are paired, by which a terminal unit 381 is formed.

The terminals 381-1 and 381-2 include electrodes 391-1 and 391-2 corresponding to the respective eight electrodes 361', 361A', and 361B' of the test terminals 351', 351A', and 351B' of the inertial measurement apparatuses 241', 241 A', and 241B', and are formed across a width W at a pitch similar to the pitch of the test terminals 351', 351A', and 351B'.

Each of the connection terminals 383-1 and 383-2 is electrically connected to the terminals 381-1 and 381-2, respectively, and is electrically connected via a cable 373 to a test apparatus 372 that supplies a signal necessary for the adjustment inspection.

Because the spring 384 generates repulsive force in a lateral outward direction in Fig. 16, in a state where no external force is applied, the terminals 381-1 and 381-2 of the seesaws 371a-1 and 371a-2 are in contact with each other about the axis CP, and the opposite end portions on which the connection terminals 383-1 and 383-2 are provided are open left and right.

The knobs 382-1 and 382-2 are configured to be able to be pinched by, for example, an index finger and thumb of a user, and when pinched to apply pressure about the axis CP to an inner side from a left and right outside as denoted by directions of arrows G in the drawing so as to overcome the repulsive force of the spring 384, the seesaws 371a-1 and 371a-2 pivot about the axis CP, and the terminals 381-1 and 381-2 are pulled apart in directions of arrows H to open.

When the user releases the knob 382-1 or 382-2 in a state where the terminals 381-1 and 381-2 are pulled apart in the directions of the arrows H to open, and where the terminal 381-1 is facing the test terminal 351'-1, 351A'-1, or 351B'-1, and the terminal 381-2 is facing the test terminal 351'-2, 351A'-2, or 351B'-2, due to the repulsive force of the spring 384, the terminal 381-1 is fixed in contact with the test terminal 351'-1, 351A'-1, or 351B'-1, and the terminal 381-2 is fixed in contact with the test terminal 351'-2, 351A'-2, or 351B'-2.

As described above, when the terminal 381-1 is fixed in contact with the test terminal 351'-1, 351A'-1, or 351B'-1, and the terminal 381-2 is fixed in contact with the test terminal 351'-2, 351A'-2, or 351B'-2, the test clip 371 and the inertial measurement apparatus 241', 241A', or 241B' remain in an electrically connected state where the adjustment inspection by the test apparatus 372 can be performed.

Furthermore, after completion of the adjustment inspection by the test apparatus 372, the user can easily release the test clip 371 from the connection with the inertial measurement apparatus 241', 241A', or 241B' and remove the test clip 371 by pinching the knobs 382-1 and 382-2 to apply pressure to overcome the repulsive force of the spring 384.

With this arrangement, by using the inertial measurement apparatus 241', 241A', or 241B' and the test clip 371 as illustrated in Fig. 14 and pinching the knobs 382-1 and 382-2, the inertial measurement apparatus 241', 241A', or 241B' and the test clip 371 can be easily attached to and detached from each other.

That is, as compared with a case where the inertial measurement apparatuses 321 to be subjected to the adjustment inspection are sequentially replaced and the adjustment inspection is repeated by using the test apparatus 301 as described with reference to Figs. 12 and 13, time and effort related to the adjustment inspection can be saved, because it is possible to switch the inertial measurement apparatuses 241', 241A', or 241B' to be subjected to the adjustment inspection only by pinching the knobs 382-1 and 382-2 to attach or detach the test clip 371.

Furthermore, because the common test terminal 351', 351A', or 351B' is formed in any of the inertial measurement apparatus 241', 241A', or 241B', it is possible to achieve easy and quick adjustment inspection of various inertial measurement apparatus 241', 241A', or 241B' by using one test clip 371.

Note that the present disclosure may also have the following configurations.
<1> An inertial measurement apparatus including
   an inertial measurement unit (IMU) that detects angular velocity and acceleration,
   an IMU fixing substrate having a recess in which the IMU is embedded and fixed, and
   a part that functions as a lid of the recess.
<2> The inertial measurement apparatus according to <1>,
   in which the part that functions as the lid of the recess is a control IC.
<3> The inertial measurement apparatus according to <1>,
   in which the part that functions as the lid of the recess is a substrate on which the IMU fixing substrate is disposed.
<4> The inertial measurement apparatus according to <1>,
   in which the part that functions as the lid of the recess is a label in a form of a sheet.
<5> The inertial measurement apparatus according to <1>,
   in which the part that functions as the lid of the recess is a control IC in a case where the recess is smaller than the control IC, and
   the part that functions as the lid of the recess is a label in a form of a sheet in a case where the recess is larger than the control IC.
<6> The inertial measurement apparatus according to <1>,
   in which the IMU fixing substrate is a ceramic substrate.
<7> The inertial measurement apparatus according to <1>,
   in which the IMU fixing substrate has the recess on both an upper surface and a lower surface.
<8> The inertial measurement apparatus according to <1>,
   in which the IMU fixing substrate has the recess on an upper surface.
<9> The inertial measurement apparatus according to <1>,
   in which the IMU fixing substrate has the recess on a lower surface.
<10> The inertial measurement apparatus according to any one of <1> to <6>,
   in which the IMU fixing substrate has the recess on at least either an upper surface or a lower surface.
<11> The inertial measurement apparatus according to <1>,
   in which one the IMU is embedded and fixed in the recess of the IMU fixing substrate.
<12> The inertial measurement apparatus according to <1>,
   in which two the IMUs are embedded and fixed in the recess of the IMU fixing substrate.
<13> The inertial measurement apparatus according to <1>,
   in which four the IMUs are embedded and fixed in the recess of the IMU fixing substrate.
<14> The inertial measurement apparatus according to <1>,
   in which at least one or more the IMUs are embedded and fixed in the recess of the IMU fixing substrate.
<15> The inertial measurement apparatus according to <1>,
   in which, in addition to the IMU, another sensor is embedded and fixed in the recess of the IMU fixing substrate.
<16> The inertial measurement apparatus according to <15>,
   in which the another sensor includes an atmospheric pressure sensor, a temperature sensor, and a humidity sensor.
<17> The inertial measurement apparatus according to <15>,
   in which the part that functions as the lid of the recess forms a gap with the recess.

### REFERENCE SIGNS LIST

211 Drone
231 Main body unit
232, 232-1 to 232-4Rotary wing
233 Camera
234 Leg
241, 241', 241-1, 241-2, 241A, 241A', 241B, 241B' INERTIAL MEASUREMENT APPARATUS
261, 261A, 261B Control IC
262, 262-1, 262-2, 262A-1, 262A-2, 262B-1, 262B-2 IMU block
262a, 262a-1-1, 262a-1-2, 262a-2-1, 262a-2-2, 262aB-1-1 to 262aB-1-4, 262aB-2-1 to 262aB-2-4, 262aC, 262aD IMU
263, 263A, 263B Substrate
271, 271A, 271B IMU fixing substrate
281-1, 281-2, 281A-1, 281A-2, 281B-1, 281B-2, 281CF, 281CB Recess (cavity)
351, 351-1, 351-2, 351A, 351A-1, 351A-2, 351B, 351B-1, 351B-2 Test terminal
361, 361A, 361B Electrode
371 Test clip
372 Test apparatus
381 Terminal unit
381-1, 381-2 Terminal
382, 382-1, 382-2 Knob
383, 383-1, 383-2 Connection terminal

## Claims

1. An inertial measurement apparatus comprising:
an inertial measurement unit (IMU) that detects angular velocity and acceleration;
an IMU fixing substrate having a recess in which the IMU is embedded and fixed; and
a part that functions as a lid of the recess.

2. The inertial measurement apparatus according to claim 1,
wherein the part that functions as the lid of the recess is a control IC.

3. The inertial measurement apparatus according to claim 1,
wherein the part that functions as the lid of the recess is a substrate on which the IMU fixing substrate is disposed.

4. The inertial measurement apparatus according to claim 1,
wherein the part that functions as the lid of the recess is a label in a form of a sheet.

5. The inertial measurement apparatus according to claim 1,
wherein the part that functions as the lid of the recess is a control IC in a case where the recess is smaller than the control IC, and
the part that functions as the lid of the recess is a label in a form of a sheet in a case where the recess is larger than the control IC.

6. The inertial measurement apparatus according to claim 1,
wherein the IMU fixing substrate is a ceramic substrate.

7. The inertial measurement apparatus according to claim 1,
wherein the IMU fixing substrate has the recess on both an upper surface and a lower surface.

8. The inertial measurement apparatus according to claim 1,
wherein the IMU fixing substrate has the recess on an upper surface.

9. The inertial measurement apparatus according to claim 1,
wherein the IMU fixing substrate has the recess on a lower surface.

10. The inertial measurement apparatus according to claim 1,
wherein the IMU fixing substrate has the recess on at least either an upper surface or a lower surface.

11. The inertial measurement apparatus according to claim 1,
wherein one the IMU is embedded and fixed in the recess of the IMU fixing substrate.

12. The inertial measurement apparatus according to claim 1,
wherein two the IMUs are embedded and fixed in the recess of the IMU fixing substrate.

13. The inertial measurement apparatus according to claim 1,
wherein four the IMUs are embedded and fixed in the recess of the IMU fixing substrate.

14. The inertial measurement apparatus according to claim 1,
wherein at least one or more the IMUs are embedded and fixed in the recess of the IMU fixing substrate.

15. The inertial measurement apparatus according to claim 1,
wherein, in addition to the IMU, another sensor is embedded and fixed in the recess of the IMU fixing substrate.

16. The inertial measurement apparatus according to claim 15,
wherein the another sensor includes an atmospheric pressure sensor, a temperature sensor, and a humidity sensor.

17. The inertial measurement apparatus according to claim 15,
wherein the part that functions as the lid of the recess forms a gap with the recess.
